# EUROPÄISCHE PATENTSCHRIFT

(11) **EP 2 747 897 B1**
(45) Veröffentlichungstag und Bekanntmachung des Hinweises auf die Patenterteilung: **09.01.2019**
(21) Anmeldenummer: 12746285.1
(22) Anmeldetag: 09.08.2012
(51) Int. Cl.: B05B 15/00, B05B 16/00

(54) **LACKIERVORRICHTUNG**
PAINTING DEVICE
DISPOSITIF DE MISE EN PEINTURE

(30) Priorität: 22.08.2011 DE 102011110802
(43) Veröffentlichungstag der Anmeldung: 02.07.2014
(73) Patentinhaber: Oerlikon Surface Solutions AG, Pfäffikon, 8808 Pfäffikon (CH)
(72) Erfinder: RIBEIRO, Carlos, Ho Chi Minh City Saigon (VN)
(74) Vertreter: Kempkens, Anke
(86) Internationale Anmeldenummer: PCT/EP2012/003399
(87) Internationale Veröffentlichungsnummer: WO 2013/026535

(56) Entgegenhaltungen:
- EP-A1- 1 132 186
- EP-A2- 1 964 617
- DE-A1- 3 117 392
- DE-U1- 29 520 824

## Beschreibung

Die vorliegende Erfindung betrifft eine Lackiereinrichtung für in einer Werkstückhalterung angeordnete Werkstücke.
Lackiereinrichtungen basieren in der Regel auf Spritzverfahren. Dabei wird der aufzubringende Lack mittels einer Düse in der Form feiner Tröpfchen auf das zu lackierende Werkstück aufgesprüht. Nach dem Aufsprühen des Lackes wird dieser getrocknet. In vielen Fällen findet anschliessend eine Aushärtung des Lackes, beispielsweise in Form einer Vernetzung statt. Der beim Aufsprühen des Lackes in der Umgebung des Werkstücks entstehende "Nebel" ist dabei nur schwer zu unterdrücken, wenn nicht gar unvermeidlich. Dies hat einerseits zur Folge, dass ein Grossteil des verwendeten Lackes nicht am Werkstück, sondern in die Umgebung diffundieret. Entsprechend höher wird dadurch die für die Lackierung pro Werkstück notwendige Materialmenge. Um zu verhindern, dass die meist nicht umweltverträglichen Lacke und gegebenenfalls deren Lösungsmittel ungehindert in die Aussenwelt entweichen, werden solche Lackiereinrichtungen in einer Lackierkammer angeordnet. Die Lacktröpfchen wandern dann höchstens bis zur Kammerwand, wo sie sich ablagern. Dies bedeutet aber, dass die Kammerwände in regelmässigen Abständen gereinigt werden müssen, was in der Regel zeitaufwändig ist und zu einer Produktionsunterbrechung führt.
Viele Jahre wurden Lackiereinrichtungen manuell betrieben. Heute überwiegen die vollautomatisierten Lackiereinrichtungen. Die ehemalige Aufgabe des Lackierers, die Düse während des Lackiervorganges zu führen, wird dabei in der Regel von Robotern übernommen. Besonders attraktiv sind heutzutage Inline-Produktionslinien, bei denen die mit zu lackierenden Werkstücken bestückte Werkstückträger mittels einer Transporteinrichtung in die Lackierkammer eingefahren werden, während an einer Station vor der Lackierkammer Werkstücke in einem analogen Werkstückträger zur Lackierung vorbereitet, zum Beispiel gereinigt werden und an einer Station nach der Lackierkammer soeben lackierte Werkstücke nachbehandelt werden, z.B. getrocknet und gegebenenfalls ausgehärtet werden.

Lackieranlagen sind aus DE29520824U1, EP1964617A2, DE3117392A1 oder DE102011110802 bekannt.

Vor diesem Hintergrund wäre es wünschenswert, eine verbesserte Lackiereinrichtung zur Verfügung zu haben, welche es erlaubt den Materialeinsatz des Lackes stark zu reduzieren und die Häufigkeit der Lackierkammer-Reinigungszyklen zu verkleinern. Dem liegt die Aufgabe der vorliegenden Erfindung zugrunde.

Erfindungsgemäss wird die Aufgabe dadurch gelöst, dass innerhalb der eigentlichen Lackierkammer eine während des Lackierprozesses den Werkstückträger umgebende Ummantelung mit erfindungsgemässer Geometrie vorgesehen wird. Diese ist einerseits an eine in der Lackierkammer vorgesehene Gaszuführvorrichtung gekoppelt greift andererseits in den Werkstückträger dergestalt, dass der von der Gaszuführvorrichtung Gasstrom innerhalb der Ummantelung an den mit Werkstücken belegten Bestandteilen des Werkstückträgers vorbeigeführt wird und Lacktröpfen, welche sich nicht auf den Werkstücken ablagern zum grossen Teil mit sich transportiert. Durch Filterung können die mitgerissenen Lacktröpfchen gesammelt und erneut zur Lackierung eingesetzt werden. Diejenigen Lacktröpfchen, welche nicht mit dem Gasstrom mitgeführt werden, setzen sich zum Grossteil an den Innenwänden der Ummantelung ab. Dies führt, ähnlich einer dem Regen ausgesetzten Fensterscheibe, zum Anwachsen der Tropfen an der Oberfläche und schliesslich zu einem Abfliessen. Erfindungsgemäss kann dieser abfliessende Lack in einem Auffangbehälter gesammelt und anschliessend wieder für die Lackierung eingesetzt werden. Aufgrund der Ummantelung landet nur wenig Lackmaterial an den Wänden der Lackierkammer. Die Ummantelung ist so ausgestaltet, dass sie sich einfach aus der Lackierkammer abmontieren lässt. Eine Reinigung der Ummantelung ist damit einfach und aufgrund der Rückgewinnung des Lackes sowieso seltener notwendig.

In einer bevorzugten Ausführungsform der vorliegenden Erfindung verjüngt sich der Innendurchmesser der Ummantelung unterhalb demjenigen Bereich, welcher den zu lackierenden Werkstücken nahe ist. Dies hat zu Folge, dass dort wo die Strömungsgeschwindigkeit zunimmt ,diejenigen Lacktröpfchen, welche die Werkstücke verpasst haben, effizienter mit dem Gasstrom mitgerissen werden.

In einer weiteren bevorzugten Ausführungsform der vorliegenden Erfindung ist die Ummantelung beweglich in der Lackierkammer angeordnet, derart, dass nach Einfahren des Werkstückträgers in die Lackierkammer die Ummantelung über die wesentlichen Bestandteile des Werkstückträgers "gestülpt" werden können und nach dem Lackiervorgang die Ummantelung den Werkstückträger wieder freigeben kann.

Die Erfindung wird nun im Detail anhand von Beispielen und mit Hilfe der Figuren näher beschrieben.
Figur 1 zeigt eine erfindungsgemässe Lackiervorrichtung
Figur 2 zeigt in Draufsicht wie, gemäss einer Ausführungsform der vorliegenden Erfindung, die Ummantelung in den Werkstückträger eingreift.
Figur 3 zeigt in Seitenansicht einen Schnitt durch einen Werkstückträgerteil mitsamt erfindungsgemässer Ummantelung gemäss einer bevorzugten Ausführungsform sowie die dort vorherrschenden Strömungsverhältnisse.

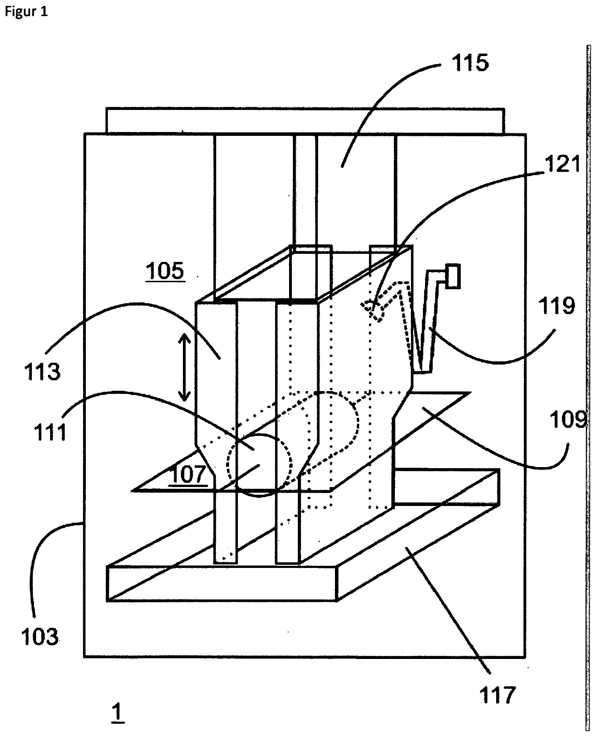

In Figur 1 dargestellt ist eine Lackieranlage 101 mit Lackierkammer 103 und Lackiervorrichtung 105. Die Lackiervorrichtung 105 umfasst einen Werkstückträger 107 mit Rahmen 109 an dem rotierbar eine Spindel 111 angeordnet ist, wobei die Spindel 111 die zu lackierenden Werkstücke trägt (nicht gezeigt). Die Lackiervorrichtung 105 umfasst ausserdem eine Ummantelung 113, welche über einen Antrieb (nicht gezeigt) nach oben und unten verschoben werden kann, angedeutet durch den Pfeil. Die Lackiervorrichtung 105 umfasst ausserdem eine Gaszufuhranordnung 115 und ein Sammelbecken 117. Des Weiteren umfasst die Lackiervorrichtung gemäss vorliegender Ausführungsform einen Lackierroboter 119 mit Lackierdüse 121.

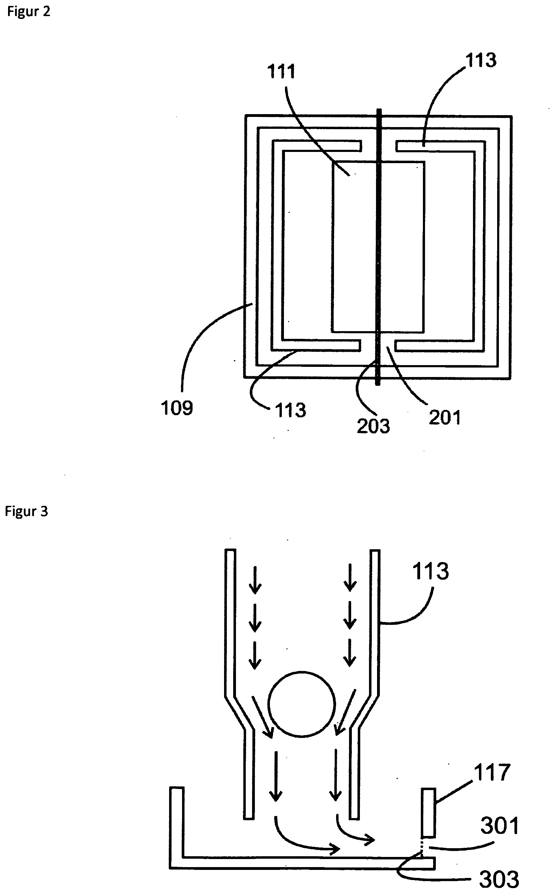

Um Werkstücke zu lackieren wird, bei nach oben gefahrener Ummantelung 113, ein Werkstückträger 107 in die Lackierkammer 103 mit Hilfe einer Transporteinrichtung (nicht gezeigt) eingebracht. Anschliessend wird die Ummantelung 113 nach unten gefahren, so dass sie die Spindel 111 ummantelt. Im vorliegenden Ausführungsbeispiel ist die Ummantelung 113 dann zwischen Rahmen 109 und Spindel 111 des Werkstückträgers angeordnet. Figur 2 zeigt einen Querschnitt in Draufsicht der entsprechenden Situation. Die Spindel 111 ist mit Hilfe der Welle 203 am Rahmen 109 angeordnet. Die Ummantelung 113 umfasst nach unten offene Schlitze 201, so dass es möglich ist, die Ummantelung zwischen Rahmen 109 und Spindel 111 anzuordnen.

Über die Gaszuführanordnung 115 wird nun ein Gasstrom etabliert, wobei Gas durch das innere der Ummantelung 113 an der Spindel vorbeiströmt und zum Sammelbecken 117 strömt. Figur 3 zeigt die dementsprechenden Strömungsverhältriisse, wobei kurze Pfeile auf eine niedrige Strömungsgeschwindigkeit hinweisen und lange Pfeile auf eine hohe Strömungsgeschwindigkeit hinweisen. Das Sammelbecken 117 enthält einen Gasauslass 301 durch den das Gas abgezogen wird.

Dieser Gasauslass 301 enthält einen Lackfilter 303 welcher die im Gasstrom enthaltenen Lacktröpfchen herausfiltert und dem Sammelbecken 117 zuführt.

Anschliessend wird die rundum mit zu lackierenden Werkstücken bestückte Spindel 111 in Rotation versetzt und der Lackierroboter wird durch die Schlitze 201 ins Innere der Ummantelung 113 gefahren und der Lackierprozess wird gestartet. Nach Beendigung des Lackierprozesses wird die Ummantelung 113 wieder nach oben gefahren und das lackierte Gut kann aus der Lackierkammer gefahren werden.

Manche Lacke auf Lösungsmittelbasis weisen derart flüchtige Lösungsmittel auf, dass sich ohne weitere Massnahme die Rückgewinnung über das Sammelbecken nicht lohnt, da der Lack dort bereits zu sehr austrocknet. Gemäss einer weiteren bevorzugten Ausführungsform der vorliegenden Erfindung wird dem Gasstrom Lösungsmittel zugesetzt, vorzugsweise in Sättigungskonzentration so dass eine "Austrocknung" des Lackes im Sammelbecken aufgrund der bereits gesättigten Atmosphäre nicht möglich ist.

## Patentansprüche

1. Lackieranlage (101) umfassend eine Lackierkammer (103) in der eine Lackiervorrichtung (105) angeordnet ist, wobei die Lackiervorrichtung (105) einen Lackierroboter (119) und einen Werkstückträger (107) umfasst, wobei die Lackiervorrichtung (105) eine bewegliche Ummantelung (113) und der Werkstückträger (107) einen Rahmen (109) und eine Werkstückaufnahme (111) umfasst, wobei,
• die Ummantelung (113) so ausgestaltet ist, dass sie sich einfach aus der Lackierkammer (103) abmontieren lässt, **dadurch gekennzeichnet, dass**
• die Ummantelung (113) in der Lackierkammer (103) dergestalt beweglich angeordnet ist, dass sie nach Einfahren des Werkstückträgers (107) in die Lackierkammer (103) über die wesentlichen Bestandteile des Werkstückträgers (107) gestülpt werden kann und nach dem Lackiervorgang den Werkstückträger (107) wieder freigeben kann, und
• die Ummantelung (113) in einer Position angeordnet oder platziert werden kann, welche ermöglicht, dass während des Lackiervorganges die Ummantelung (113) zwischen Rahmen (109) und Werkstückaufnahme (111) sich befinden kann und dabei die Ummantelung (113) die Werkstückaufnahme (111) ummanteln kann, und
• die Ummantelung (113) vor und nach dem Lackiervorgang entfernt werden kann oder von der Position zwischen Rahmen (109) und Werkstückaufnahme (111) dergestalt verschoben werden kann, dass die Ummantelung (113) die Werkstückaufnahme (111) nicht ummanteln kann.

2. Lackieranlage (101) nach Anspruch 1 **dadurch gekennzeichnet, dass** die Ummantelung (113) in der Lackierkammer (103) dergestalt beweglich angeordnet ist, dass sie mindestens von einer oberen Position zu einer unteren Position und umgekehrt in der vertikalen Richtung dergestalt nach oben und unten verschoben werden kann, dass in der unteren Position die Ummantelung (113) zwischen Rahmen (109) und Werkstückaufnahme (111) sich befindet und die Werkstückaufnahme (111) ummanteln kann, und in der oberen Position die Ummantelung (113) die Werkstückaufnahme (111) nicht ummanteln kann.

3. Lackieranlage (101) nach einem der vorangehenden Ansprüche **dadurch gekennzeichnet, dass** die Werkstückaufnahme (111) eine an dem Rahmen (109) des Werkstückträgers (107) rotierbar angeordnete Spindel (111) ist.

4. Lackieranlage nach einem der vorangehenden Ansprüche, **dadurch gekennzeichnet, dass** die Lackiervorrichtung (105) eine Gaszufuhranordnung (115) umfasst, so dass während des Lackierprozesses die Werkstücke mit einem durch das Innere der Ummantelung (113) strömenden Gasstrom beaufschlagt werden können.

5. Lackieranlage nach Anspruch 4, **dadurch gekennzeichnet, dass** die Ummantelung (113) eine Verjüngung aufweist wodurch die Strömungsgeschwindigkeit des Gasstromes erhöht wird und die durch den Lackierprozess entstehenden Lacktröpfchen mitgeführt werden.

6. Lackieranlage nach einem der vorangehenden Ansprüche, **dadurch gekennzeichnet dass** die Lackiereinrichtung (105) ein Sammelbecken (117) umfasst derart, dass sich an der Ummantelung (113) ansammelnder und von dieser abtropfender Lack in das Sammelbecken (117) laufen kann und dort einer Wiederverwertung zugeführt werden kann.

7. Lackieranlage nach einem der vorangehenden Ansprüche 4 bis 6, **dadurch gekennzeichnet, dass** an der Lackieranlage eine Zufuhr von Lösungsmitteln vorgesehen ist derart, dass dem über die Gaszufuhranordnung in das Innere der Ummantelung eingeführte Gas eine Lösungsmittelkonzentration gegeben werden kann, welche eine Austrocknung des Lackes an den Wänden der Ummantelung und oder im Sammelbecken entgegenwirkt.

## Claims

1. Painting facility (101) comprising a painting chamber (103) in which a painting device (105) is arranged, wherein the painting device (105) comprises a painting robot (119) and a workpiece holder (107), wherein the painting device (105) comprises a movable casing (113) and the workpiece holder (107) comprises a frame (109) and a workpiece mount (111), wherein
• the casing (113) is designed in such a manner that it can easily be removed out of the painting chamber (103), **characterized in that**
• the casing (113) is arranged in the painting chamber (103) in a movable manner in such a way that once the workpiece holder (107) has been inserted into the painting chamber (103), the casing can be put over the essential components of the workpiece holder (107) and, after the painting process, the casing can then release the workpiece holder (107), and
• the casing (113) can be arranged or placed in a position which allows that during the painting process the casing (113) can be placed between the frame (109) and the workpiece mount (111) and thereby the casing can encase the workpiece mount (111), and
• the casing (113) can be removed before and after the painting process or can be displaced from the position between the frame (109) and the workpiece mount (111) in such a manner that the casing cannot encase the workpiece mount (111).

2. Painting facility (101) according to claim 1 **characterized in that** the casing (113) is arranged in a movable manner in the painting chamber (103) in such a way that it can be displaced at least from an upper position to a lower position and vice versa in the vertical direction upwards and downwards in such a way that in the lower position the casing (113) is placed between the frame (109) and the workpiece holder (111) and it can encase the workpiece holder (111), and in the upper position the encasing (113) cannot encase the workpiece holder (111).

3. Painting facility (101) according to one of the preceding claims **characterized in that** the workpiece mount (111) is a spindle (111) mounted rotatably at the frame (109) of the workpiece holder (107).

4. Painting facility according to one of the preceding claims, **characterized in that** the painting device (105) includes a gas inlet arrangement (115) so that during the painting process, a gas flow flowing through the inside of the casing (113) can be applied to the workpieces.

5. Painting facility according to claim 4, **characterized in that** the casing (113) has a tapering, allowing the flow rate of the gas flow to be increased and the paint droplets generated by the painting process to be carried along.

6. Painting facility according to one of the preceding claims, **characterized in that** the painting device (105) comprises a catch vessel (117) in such a way that the paint collecting on the casing (113) and dripping from it can run into the catch vessel (117) and be fed to a recovery system.

7. Painting facility according to one of the preceding claims 4 to 6, **characterized in that** in the coating facility, a supply of solvents is provided in such a way that a solvent concentration can be added to the gas introduced in the inside of the casing through the gas inlet arrangement, which solvent concentration prevents the paint from drying on the walls of the casing and/or in the catch vessel.

## Revendications

1. Installation de vernissage (101) comprenant une chambre de vernissage (103) dans laquelle un dispositif de vernissage (105) est disposé, le dispositif de vernissage (105) comprenant un robot de vernissage (119) et un porte-pièce (107), le dispositif de vernissage (105) comprenant un enrobage mobile (113) et le porte-pièce (107) comprenant un châssis (109) et une prise de pièce (111),
• l'enrobage (113) étant désigné de telle manière qu'il peut être facilement démonté de la chambre de vernissage (103), **caractérisé en ce que**
• l'enrobage (113) est disposé de façon mobile dans la chambre de vernissage (103) de telle manière que, après que le porte-pièce (107) a été inséré dans la chambre de vernissage (103), l'enrobage peut être mis sur les composants essentiels du porte-pièce (107) et après le procédé de vernissage l'enrobage peut alors relâcher le porte-pièce (107), et
• l'enrobage (113) peut être disposé ou placé dans une position qui permet à l'enrobage (113) de se placer pendant le procédé de vernissage entre le châssis (109) et le la prise de pièce (111) et ainsi l'enrobage (113) peut enrober la prise de pièce (111), et
• l'enrobage (113) peut être enlevé avant et après le procédé de vernissage ou il peut être déplacé de la position entre le châssis (109) et la prise de pièce (111) de telle manière que l'enrobage (113) ne peut pas enrober la prise de pièce (111).

2. Installation de vernissage (101) selon la revendication 1 **caractérisé en ce que** l'enrobage (113) est disposé dans la chambre de vernissage (103) de façon mobile de telle manière qu'il peut être déplacé du moins d'une position supérieure à une position inférieure et inversement dans la direction verticale vers le haut et le bas de telle manière que l'enrobage (113) se trouve dans la position inférieure entre le châssis (109) et la prise de pièce (111) et il peut enrober la prise de pièce (111), et dans la position supérieure l'enrobage (113) ne peut pas enrober la prise de pièce (111).

3. Installation de vernissage (101) selon l'une des revendications précédentes **caractérisée en ce que** la prise de pièce (111) est une broche (111) placée de manière rotative au châssis (109) du porte-pièce (107).

4. Installation de vernissage (101) selon l'une des revendications précédentes **caractérisée en ce que** le dispositif de vernissage (105) comprend un dispositif d'admission de gaz (115) de sorte que pendant le procédé de vernissage un flux de gaz coulant à travers l'intérieur de l'enrobage (113) peut être appliqué aux pièces.

5. Installation de vernissage (101) selon la revendication 4 **caractérisée en ce que** l'enrobage (113) a un rétrécissement permettant au flux gazeux d'augmenter la vitesse d'écoulement et aux gouttelettes se formant par le procédé de vernissage d'être emportées.

6. Installation de vernissage selon l'une des revendications précédentes **caractérisée en ce que** le dispositif de vernissage (105) comprend un bassin collecteur (117) de telle manière que du vernis qui s'accumule à l'enrobage (113) et égoutte de celui-ci peut couler dans le bassin collecteur (117) et y être amené au recyclage.

7. Installation de vernissage selon l'une des revendications précédentes 4 - 6 **caractérisée en ce qu'**une introduction de solvants est prévue à l'installation de vernissage de telle manière qu'une concentration en solvants peut être ajoutée au gaz introduit dans l'intérieur de l'enrobage via le dispositif d'admission de gaz, cette concentration en solvants prévenant un dessèchement du vernis aux parois de l'enrobage et/ou dans le bassin collecteur.
